# EUROPÄISCHE PATENTANMELDUNG

(11) **EP 0 690 240 A1**
(43) Veröffentlichungstag der Anmeldung: **03.01.1996**
(21) Anmeldenummer: 95109661.9
(22) Anmeldetag: 22.06.1995
(51) Int. Cl.: F16B 23/00

(54) **Sicherheitsschraubelement**

(30) Priorität: 28.06.1994 DE 4422616
(71) Anmelder: Plaumann, Armin, D-87600 Kaufbeuren (DE)
(72) Erfinder: Plaumann, Armin, D-87600 Kaufbeuren (DE)

(57) **Zusammenfassung**

Ein Sicherheitsschraubelement (10) weist einen Kopf (12) einer Schraube oder einer Mutter mit rotationssymmetrischer Außenfläche auf, die von einer frei drehbaren Schutzhülse (22) umgeben ist. In der Stirnfläche des Kopfes (12) befindet sich eine exzentrische und/oder unrunde Vertiefung, deren Kontur die Achse des Kopfes umgibt. Ein Kupplungselement (30) hat stirnseitig einen Gegenkupplungsabschnitt (34), der in Form und Anordnung zum Kupplungsabschnitt (20) komplementär ist. Der Kopf (12) des Schraubelementes (10) kann nur mit diesem passenden Kupplungselement (30) gedreht werden. Unbefugte können nicht einmal mit Hammer und Meißel den Kopf des Kupplungselementes losschlagen, da der Kupplungsabschnitt (20) in Umfangsrichtung keine Ansatzflächen bildet.

## Beschreibung

Die Erfindung bezieht sich auf ein Sicherheitsschraubelement mit einem Kopf und einem koaxialen Schraubabschnitt, wobei der Kopf von einer frei drehbaren Schutzhülse umgeben ist und seine freiliegende Stirnfläche einen exzentrischen und/oder unrunden Kupplungsabschnitt zum formschlüssigen Eingriff eines axial kuppelbaren Kupplungselementes aufweist.

Ein derartiges Sicherheitsschraubelement ist aus der GB-2254900 A1 bekannt. Der Kupplungsabschnitt besteht aus einer Randausnehmung in der Stirnfläche des als Schraubmutter ausgebildeten Kopfes. Die Schutzhülse hat eine damit in Deckung bringbare entsprechende Randausnehmung. Das Kupplungselement in Form eines Betätigungshebels hat einen komplementären Vorsprung, der beim Aufsetzen des Werkzeuges auf das Schraubelement in den Kupplungsabschnitt des Kopfes eingreift, sodaß der Kopf gedreht werden kann. Da die Schutzhülse frei drehbar ist, kann der Kopf, also Schraube oder Mutter nicht mit einer Zange gedreht werden. Nachteilig ist allerdings, daß der Kupplungsabschnitt am Außenrand des Kopfes zuganglich ist, sodaß hier ein Meißel angesetzt werden kann, um durch Hammerschläge Drehkräfte auf den Kopf auszuüben, sodaß die Mutter gelöst werden kann.

Sicherheitsschraubelemente dienen dazu, hochwertige Gegenstände gegen Diebstahl zu schützen. Sie ersetzen einfache Sechskant- oder Flügelschrauben und werden von einem Spezialwerkzeug betätigt. Das bekannte Sicherheitsschraubelement erschwert zwar das unbefugte Losschrauben, verhindert dies aber nicht mit Sicherheit.

Aufgabe der Erfindung ist es, das bekannte Sicherheitsschraubelement dahingehend zu verbessern, daß auch bei Zuhilfenahme von Meißeln und Schlagwerkzeugen das Betätigen des Schraubelementes unmöglich ist.

Diese Aufgabe wird bei einem Sicherheitsschraubelement der eingangs genannten Art dadurch gelöst, daß der Kupplungsabschnitt aus einem Gebilde mit umfangsgeschlossener Kontur besteht, welche die Achse des Schraubelementes umgibt.

Dank der umfangsgeschlossenen Ausbildung der Kontur des Kupplungsabschnittes ergeben sich keinerlei Ansatzpunkte für ein passendes Handwerkzeug. Die Kontur kann beispielsweise elliptisch, oval oder zum Teil kreisförmig sein und kann sich aus einer Kombination dieser Konturenformen zusammensetzen. In diesem Fall kann der Flächenmittelpunkt des Gebildes mit der Achse des Schraubelementes zusammenfallen. Alternativ oder kumulativ kann die Kontur kreisförmig sein. In diesem Fall muß der Kreismittelpunkt zur Achse des Schraubelementes exzentrisch liegen. In jedem Fall sollten die Konturen so gewählt werden, daß die Tangenten möglichst rechtwinklig zum jeweiligen Radius eines Konturenabschnittes verlaufen. Mit einem Meißel können dann keine Drehkräfte auf den Kopf ausgeübt werden.

Gemäß einer Ausgestaltung sollten die Krümmungsradien der einzelnen Konturenabschnitte nicht stark voneinander abweichen und so besteht eine Ausgestaltung der Erfindung darin, daß die geringste Weite des Konturengebildes mindestens 50% dessen größter Weite beträgt. Während eine Ei-Form im allgemeinen zulässig ist, gilt dies in den meisten Fällen nicht mehr für eine gestreckte Tropfenform. Obwohl es bevorzugt ist, daß die Umfangskontur des Gebildes stetig gekrümmt ist, so liegt es noch im Rahmen der Erfindung, die Kontur polygonartig auszubilden, wobei die einzelnen Konturenabschnitte winklig zueinander liegen. Dieser Winkel sollte aber mindestens 135° betragen, eben zu dem Zweck, daß ein Meißel keinen Halt findet. Auch bei der Exzentrizität des Kupplungsabschnittes gilt es zu beachten, daß der geometrische Mittelpunkt der vom Kupplungsgebilde umschlossenen Fläche von der Achse des Schraubelementes einen Abstand höchstens gleich etwa 25% der größten Weite des Gebildes hat. Mit einer Exzentrizität von 10% bis etwa 20% wird ein guterder Schutz gegen unberechtigte Betätigung des Schraubelementes sichergestellt.

Die vom Gebilde umschlossene Stirnfläche ist gemäß einer Weiterbildung der Erfindung in jedem Flächenbereich im Abstand von der benachbarten Stirnfläche des Kopfes angeordnet. Das ganze Gebilde ist also in Form eines erhabenen Ansatzes oder besser einer flachen Vertiefung ausgebildet. Alternativ liegt es im Rahmen der Erfindung, das Gebilde aus einem Ringsteg oder einer Ringnut zu bilden.

Selbstverständlich liegt es im Rahmen der Erfindung, mehrere Gebilde miteinander zu kombinieren, wobei diese beiden Gebilde axial beabstandet sind und z.B. aus zwei axial aneinanderschließenden flachen Kammern unterschiedlicher Kontur und/oder verschiedener Exzentrizität bestehen. In allen Fällen versteht sich, daß das Kupplungselement eine zum Gebilde des Kupplungsabschnittes komplementäre Kontur hat, sodaß beim axialen Kuppen des Kupplungselementes ein Formschluß mit dem Kopf des Schraubelementes erfolgt, sodaß letzteres mit hohem Drehmoment festgezogen und dann auch wieder gelöst werden kann.

Das Sicherheitsschraubelement gemäß der Erfindung kann beispielsweise Bestandteil einer Fahrraddiebstahlsicherung sein, sodaß das Kupplungselement dann als "Schlüssel" wirkt. Alle Befestigungsschrauben des Fahrrades, also z.B. die Mutter für die Radachse oder Schraube bzw. Mutter der Sattelstütze können mit demselben Kupplungselement betätigt werden. Das Kupplungselement besteht vorzugsweise aus einer Metallscheibe mit dem stirnseitigen Gegenkupplungsabschnitt und radialen Armen oder Flügeln, die vorzugsweise klappbar sind, um größere Betätigungskräfte ausüben zu können. Die Schutzhülse steht gemäß einer Weiterbildung der Erfindung über den Kopf des Schraubelementes stirnseitig vor, wobei im vorstehenden Bereich eine Kammer gebildet ist, in die das Kupplungselement mindestens mit einem axialen Teilbereich eingreift. Die Schutzhülse dient hier zur Drehführung des Kupplungselementes und während der Drehung relativ zum festsitzenden Kopf wird die Stelle abgefühlt, bei der der Gegenkupplungsabschnitt in den Kupplungsabschnitt des Kopfes paßt, sodaß durch axiales Einschieben die Kupplung bewirkt ist.

Eine besonders vorteilhafte Weiterbildung besteht nun darin, daß die stirnseitige Kammer im vorstehenden Schutzhülsenbereich eine exzentrische und/oder unrunde innere Umfangsfläche aufweist, und daß in diese Kammer eine am Außenumfang komplementär ausgebildete Scheibe als Kupplungselement einsetzbar ist, das mit der Schutzhülse am Umfang und mit dem Kopf des Schraubelementes stirnseitig jeweils undrehbar gekuppelt ist. Dieses Kupplungselement bewirkt also eine Doppelkupplung, durch welche die Schutzhülse mit dem Kopf drehfest verbunden wird. Diese Ausbildung ermöglicht es, die Schutzhülse mit Flügeln zu versehen, sodaß eine entsprechende Handhabe am Kupplungselement entfällt. Das Kupplungselement besteht lediglich aus einem scheibenförmigen Körper von der Größe einer Münze, die an, Umfang vorzugsweise Rastmittel hat, die im Kupplungszustand in die Schutzhülse federnd einrasten, sodaß das Kupplungselement nicht zufällig herausfallen kann. Mittels eines ausklappbaren Fingerringes läßt sich das Kupplungselement aus der Kammer der Schutzhülse axial abziehen. Die Schutzhülse ist dann wieder frei drehbar.

Eine Weiterbildung besteht schließlich darin, daß der Schraubabschnitt des Schraubelementes von einem Gewindebolzen gebildet ist und daß sich an den Kopf eine dem Schraubabschnitt benachbart liegende konische Zentrierfläche anschließt, wobei das Schraubelement zur diebstahlsicheren Befestigung eines Kraftfahrzeugrades bestimmt ist. Die konische Zentrierfläche ist dabei vorzugsweise an einer separaten, auf den Schraubbolzen aufsteckbaren Hülse ausgebildet.

Das erfindungsgemäße Sicherheitsschraubelement ermöglicht die Realisierung einer hochwirksamen Fahrraddiebstahlsicherung, indem der Schraubabschnitt auch hier von einem Gewindebolzen des Schraubelementes gebildet ist und der Gewindebolzen mit einer Riegelstange verbunden oder verbindbar ist, die ein Speichenrad eines Fahrrades zwischen den Speichen durchsetzt, wobei der Schraubabschnitt in eine Gewindebohrung eines Halters an einem Holm einer Radgabel eingeschraubt ist und das freie Ende der Riegelstange in einem Lager am anderen Gabelholm gehaltert ist. Die Riegelstange kann gemäß einer Ausführungsform mit dem Schraubabschnitt des Schraubelementes einstückig ausgebildet sein. In diesem Fall wird die Riegelstange von einer frei drehbaren Schutzhülse unigeben. Die ganze Anordnung ist bei Nichtgebrauch an passender Stelle des Fahrrades festklemmbar. Zur Diebstahlsicherung wird die Riegelstange mit der Schutzhülse durch die Gewindebohrung des Halters hindurchgesteckt und am gegenüberliegenden Lager eingeführt. Dann wird das Schraubelement mit dem Kupplungsabschnitt in der Gewindebohrung des Halters festgeschraubt. Dabei dringt die Riegelstange tief in das Sackloch des gegenüberliegenden Lagers ein. Das Schraubelement wird festgezogen und das Kupplungselement wird abgenommen. Die Schutzhülse verhindert das Erfassen der Riegelstange mittels einer Zange.

Eine Abwandlung dieser Diebstahlsicherung besteht darin, daß die Riegelstange mit einem Ende in ein Sackloch des Lagers axial eingesteckt und mit ihrem anderen Ende in ein entsprechendes Sackloch des Schraubabschnittes des Schraubelementes eingreift. In diesem Fall bilden die Riegelstange und das Schraubelement separate Teile. Eine Schutzhülse entfällt dann, da bei Drehen der Riegelstange keine Drehkraft auf das Schraubelement übertragen wird.

Schließlich besteht noch eine Variante der Erfindung darin, daß die Riegelstange am Lager des einen Gabelholms um eine zur Radebene wenigstens angenähert rechtwinkligen Ebene schwenkbar gelagert ist und der Schraubabschnitt ein Sackloch aufweist, wobei in der Umfangswand des Schraubabschnittes ein radialer Eintrittsschlitz für das freie Ende der Riegelstange vorgesehen ist. Bei dieser vorteilhaften Variante wird der Kopf des Schraubelementes etwa um eine halbe Umdrehung losgeschraubt, womit der Eintrittsschlitz in die Schwenkebene der Riegelstange gelangt. Die Riegelstange kann dann nach oben in eine Horizontalstellung geschwenkt werden, wobei das Stangenende durch den Eintrittsschlitz in das Sackloch des Schraubabschnittes gelangt. Durch eine Gegendrehbewegung des Kopfes des Schraubelementes gelangt der Eintrittsschlitz aus der Schwenkebene der Riegelstange heraus. Gleichzeitig wird das Schraubelement am Halter festgeschraubt. Eine Schutzhülse auf der Riegelstange verhindert auch hier jegliche Drehmomentübertragung auf die Riegelstange.

In allen Fällen kann das Schraubelement aus einem Schraubbolzen bestehen, wobei der Kopf dann den Schraubenkopf darstellt, kann aber auch als Mutter ausgebildet sein, wobei der Kopf dann den Mutterkörper darstellt und der Schraubabschnitt ein Gewindeloch ist.

Anhand der Zeichnung, die einige Ausführungsbeispiele darstellt, wird die Erfindung näher beschrieben:

Es zeigt:
- FIG. 1: eine geschnittene Ansicht eines Sicherheitsschraubelementes in Form einer Schraubmutter mit zugehörigem Betätigungswerkzeug,
- FIG. 2: eine Stirnansicht von oben auf die Schraubmutter,
- FIG.3: eine Stirnansicht des Kupplungselementes gemäß FIG. 1 von unten,
- FIG. 4: eine Schraubverbindung mit einem Schraubbolzen und einer Schraubmutter, wobei beide Schraubelemente die erfindungsgemäße Sicherheitsausbildung haben,
- FIG. 5: einen Schnitt durch eine Ausführungsform eines kuppelbaren Betätigungswerkzeuges,
- FIG. 6: eine abgwandelte Ausführungsform eines Schraubelementes, bei dem die Schutzhülse mit festen Betätigungsflügeln ausgestattet ist und ein zugehöriges separates Kupplungselement zur verdrehsicheren Kupplung der Schutzhülse mit dem Kopf des Schraubelementes dient,
- FIG. 7: eine äußere Draufsicht auf das Kupplungselement,
- FIG. 8: eine Stirnseitenansicht einer Fahrrad-Diebstahlsicherung unter Verwendung des erfindungsgemäßen Schraubelementes,
- FIG. 9: eine teilweise geschnittene Draufsicht auf die Diebstahlsicherung gemäß FIG. 8,
- FIG. 10: eine vergrößerte Schnittansicht des Schraubelementes mit eingesetztem Kupplungselement gemäß FIG. 6,
- FIG. 11: eine äußere Ansicht der Anordnung von FIG. 10, und
- FIG. 12: eine Schnittansicht einer Kraftfahrzeug-Radfelge, die mit Schraubelementen gemäß der Erfindung befestigt ist.

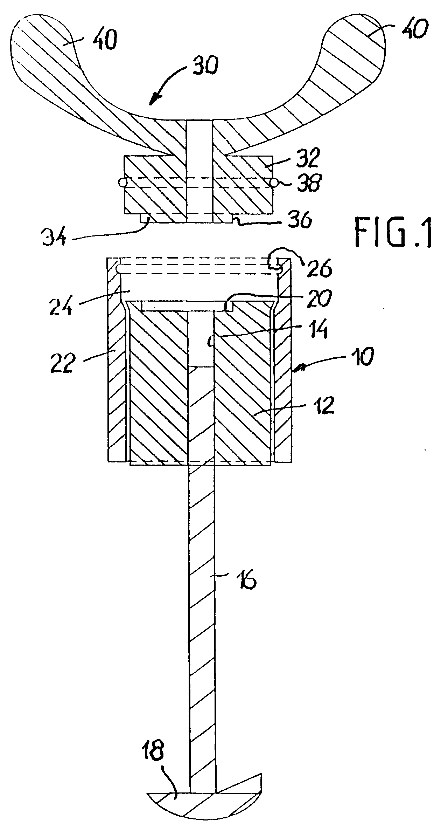

Das in FIG. 1 dargestellte Schraubelement 10 ist in Form einer Mutter ausgebildet und weist einen Kopf 12 mit rotationssymmetrischer Außenfläche und einem koaxialen Gewindeloch 14 auf, in das ein mit einem Schraubenkopf 18 versehener Schraubbolzen 16 einschraubbar ist. Der Kopf 12 weist an seiner dem Schraubbolzen abgewandten Stirnfläche einen exzentrischen Kupplungsabschnitt 20 in Form einer kreisförmig konturierten Vertiefung auf. Der Mittelpunkt dieses Kupplungsabschnittes 20 hat von der Achse des Kopfes 12 einen Abstand, der im Bereich von 10% bis etwa 15% des Durchmessers des Kupplungsabschnittes 20 liegt. Der Kupplungsabschnitt 20 umgibt das Gewindeloch 14. Auf dem Kopf 12 ist eine Schutzhülse 22 drehbar gelagert, die über die Außenstirnfläche des Kopfes 12 vorsteht und in diesem Bereich eine Kammer 24 zum Einsetzen eines Betätigungswerkzeuges 30 aufweist. Die Kammer 24 ist in ihrem Innendurchmesser gegenüber dem, den Kopf umgreifenden Abschnitt geringfügig erweitert, sodaß eine konische Schulter im Übergangsabschnitt gebildet wird, an der sich eine entsprechende flanschartige konische Erweiterung des Kopfes 12 anschließend an dessen freier Stirnfläche abstützt, sodaß die Schutzhülse 22 nicht axial abgezogen werden kann.

Das Werkzeug 30 stellt ein Kupplungselement dar und hat eine kreiszylindrische Scheibe 32, die abgesehen von einem Schiebespiel genau in die Kammer 24 der Schutzhülse 22 paßt. Am stirnseitigen Kupplungsende hat die Scheibe 32 einen Gegenkupplungsabschnitt 34 in Form eines kreiszylindrischen Ansatzes, der denselben Durchmesser aufweist, wie der Kupplungsabschnitt 20 des Kopfes 12. Die Außenkontur dieses Gegenkupplungsabschnittes ist mit 36 bezeichnet. Dieser Gegenkupplungsabschnitt 34 hat dieselbe Exzentrizität wie der Kupplungsabschnitt 20. In einer ganz bestimmten Drehstellung paßt somit der Gegenkupplungsabschnitt 34 in den Kupplungsabschnitt 20, womit das Werkzeug 30 mit dem Kopf 12 drehfest verbunden ist. Auf der Scheibe 32 befindet sich ein Federring 38, der in eine Nut 26 der Schutzhülse 22 im Bereich der Kammer 24 einrastet. Damit ist das Werkzeug 30 gegen ein unabsichtliches Herausgleiten aus der Schutzhülse 22 des Schraubelementes 10 gesichert. Mit der Scheibe 32 des Werkzeuges 30 sind zwei Flügelarme 40 verbunden, die eine Handhabe darstellen, mit der auf den Kopf 12 des Schraubelementes 10 ein Drehmoment ausgeübt werden kann.

Die in FIG. 1 dargestellte Schraubverbindung stellt z.B. die Achse für das Radlager eines Fahrrades dar. Nachdem der Kopf 12 mit dem Werkzeug 30 festgezogen worden ist, kann das Werkzeug 30 abgezogen werden und die Schraubverbindung ist für Unbefugte nicht mehr lösbar. Der Kupplungsabschnitt 20 ist kreisförmig konturiert und bildet somit keinen Ansatzpunkt, um z.B. mit einem Meißel Umfangskräfte auf den Kopf 12 auszuüben.

Die Umfangsfläche des Kupplungsabschnittes 12 ist im Ausführungsbeispiel zylindrisch dargestellt. In einer erfindungsgemäßen Variante ist diese Umfangsfläche konisch ausgebildet. Manipulationswerkzeuge finden dann noch weniger Halt.

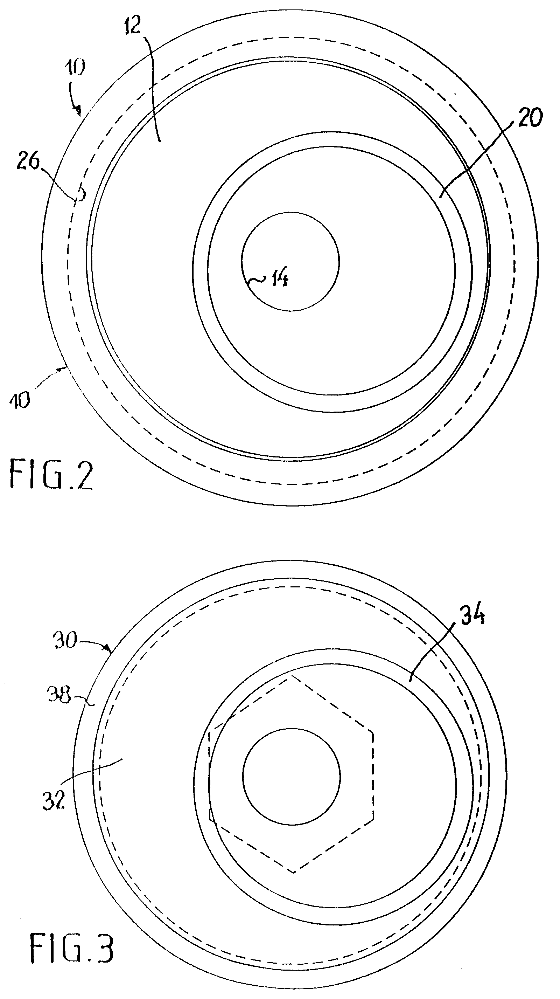

FIG. 2 zeigt die Stirnansicht des Schraubelementes 10, jedoch in einer Variante, insofern, als der Kupplungsabschnitt 20 in Form einer Ringnut ausgebildet ist. Der Querschnitt der Ringnut 20 kann parallele zylindrische Umfangsflächen aufweisen oder gemäß einer erfindungsgemäßen Alternative auch aus Kegelflächen bestehen, die einen V-förmigen Querschnitt ergeben. Wesentlich ist, daß der Kupplungsabschnitt 20 sich in alle vier Quadranten der Stirnfläche des Kopfes 12 hineinerstreckt. Die Größe der Exzentrizität und der Durchmesser des Kupplungsabschnittes 20 können frei gewählt und miteinander kombiniert werden, sodaß eine sehr große Zahl von Kodierungen bereitgestellt werden kann. Bei einer Ringnutausbildung gemäß FIG. 2 kommt noch die Breite der Ringnut als zusätzliche Kombinationsvariante hinzu.

FIG. 3 zeigt das Werkzeug 30 in einer Stirnansicht, also in FIG. 1 von unten, wobei der Gegenkupplungsabschnitt 34 in Form eines Ringsteges ausgebildet ist, der komplementär zur Ringnut 20 des Kopfes 12 ausgebildet und angeordnet ist. Dieses Werkzeug 30 hat ein koaxiales Loch, in das der Schraubbolzen 16 eintreten kann. Als Handhabe für das Werkzeug 30 ist hier ein Sechskant gestrichelt veranschaulicht, der die Flügel 40 beim Werkzeug 30 gemäß FIG. 1 ersetzt.

Eine erfindungsgemäße Variante zu dem kreiszylindrisch konturierten Kupplungsabschnitt 20 besteht darin, daß die Kontur dieses Kupplungsabschnittes 20 in Form einer Ellipse, eines Ellipsenteils, eines Ovals oder in Form einer anderen konvexen Krümmung ausgebildet ist, wobei ausdrücklich auch solche Formen unter die Erfindung fallen, die sich aus unterschiedlichen Umfangsformen zusammensetzen. Bei solchen unrunden Kupplungsabschnitten 20 kann der Flächenmittelpunkt durchaus mit der Achse des Kopfes 12 zusammenfallen, sodaß also die Exzentrizität null ist. Das schließt aber nicht aus, daß auch solche unrunden Kupplungskonturen exzentrisch angeordnet werden können, uni die Vielzahl an Kodierungsmöglichkeiten zu erhöhen. Vorzugsweise sollten jedoch alle Krüminungsabschnitte kantenfrei ineinander übergehen, auch wenn es im Rahmen der Erfindung liegt, die Kupplungsabschnitte polygonartig zu konturieren. Allerdings sollten darin die winklig aneinanderstoßenden Polygonabschnitte einen sehr stumpfen Winkel von mindestens 135° miteinander bilden, um einen Angriff mittels eines Meißels einer unberechtigten Person auszuschließen.

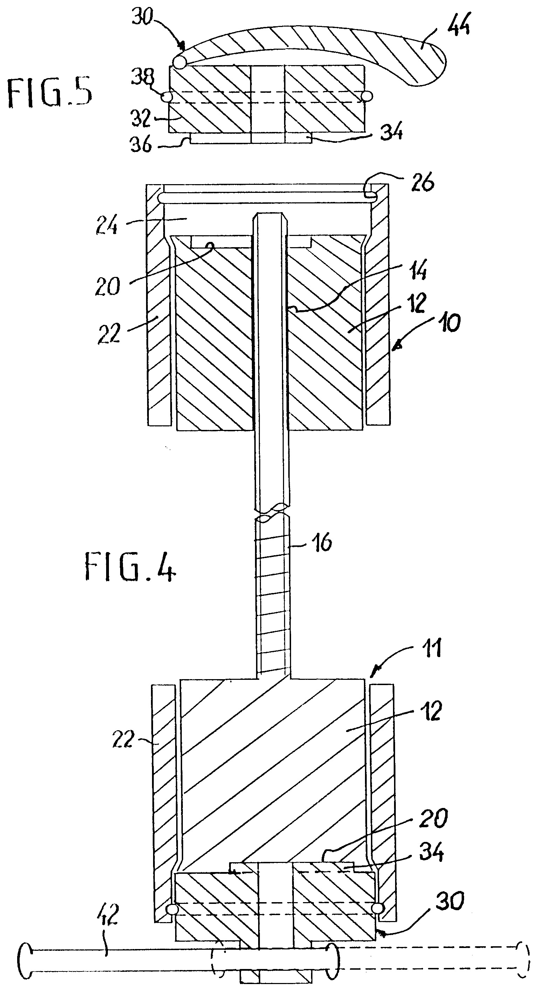

FIG. 4 zeigt eine Schraubverbindung, bei der das Schraubelement 10 demjenigen von FIG. 1 entspricht. Statt des Schraubenkopfes 18 ist hier ein Sicherheitsschraubelement 11 dargestellt, dessen Schraubenkopf demjenigen des Mutterkopfes entspricht. Auch dieser Schraubenkopf 12 der Schraube 11 ist von einer Schutzhülse 22 frei drehbar umgeben und weist einen Kupplungsabschnitt 20 auf, der in Form und Anordnung genau dem Kupplungsabschnitt 20 des Schraubelementes 10 entspricht. Beide Schraubelemente 10, 11 könnten also mit demselben Werkzeug 30 betätigt werden. In FIG. 4 ist in das Schraubelement 11 ein Werkzeug 30 eingesetzt, das einen äußeren Ansatz aufweist, in welchem eine Betätigungsstange 42 verschiebbar gehaltert ist.

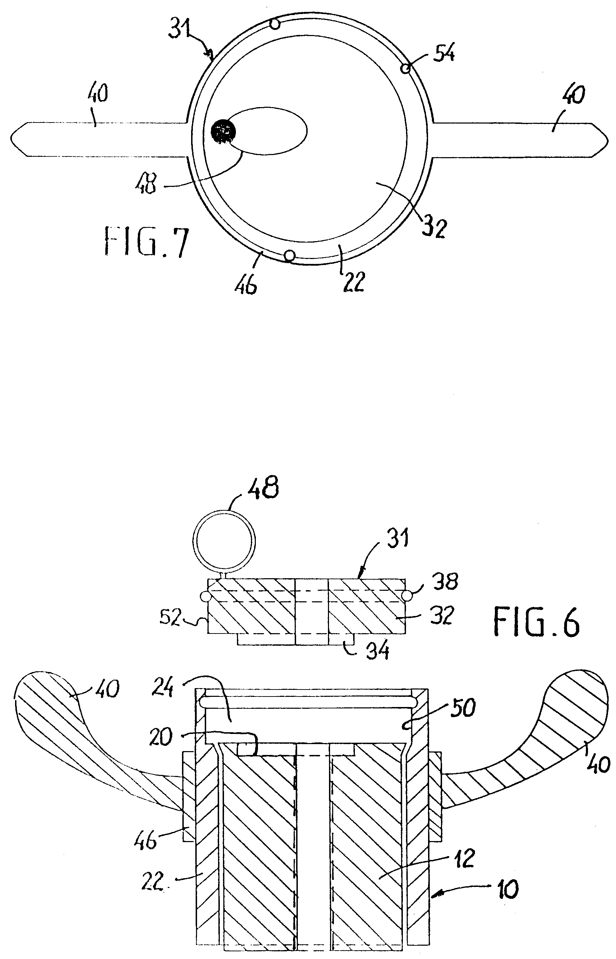

FIG. 5 zeigt ein andersartiges Betätigungswerkzeug 30, das sich hinsichtlich des Gegenkupplungsabschnittes 34 vom Werkzeug 30 der Schraube 11 nicht unterscheidet, jedoch statt der Betätigungsstange 42 einen Klappflügel 44 aufweist. Das Werkzeug 30 gemäß FIG. 4 kann durch dasjenige gemäß FIG. 5 ersetzt werden und umgekehrt.

FIG. 6 zeigt ein Schraubelement 10 in Form einer Mutter, das sich von den vorbeschriebenen Ausführungen dadurch unterscheidet, daß auf der Schutzhülse 22 eine Muffe 46 aufgeschweißt ist, die zwei diametral gegenüberliegende Flügel 40 aufweist. Um den Kopf 12 der Mutter über die Flügel 40 verschrauben zu können, muß in die Kammer 24 ein Kupplungselement 31 eingesetzt werden, Das sowohl die stirnseitige Kupplung mit einem in den Kupplungsabschnitt 20 des Kopfes 12 eingreifenden Gegenkupplungsabschnitt 34 als auch eine Umfangskupplung mit der Schutzhülse 22 bewirkt. Zu diesem Zweck ist die Kammer 24 nicht kreiszylindrisch und koaxial zum Mutterkopf 12 sondern exzentrisch zu diesem angeordnet. Dies folgt aus FIG. 6 dadurch, daß die beiden diametral gegenüberliegenden Wandquerschnitte des vorstehenden Endes der Schutzhülse 22 unterschiedliche Stärken aufweisen. Das zugehörige Kupplungselement 31 hat eine komplementäre, d. h. runde aber exzentrische Umfangsfläche bezogen auf die Lochachse. An der äußeren Stirnfläche des Kupplungselementes 31 befindet sich ein herausklappbarer Entnahmering 48, der mit einem Finger ergriffen werden kann, um das Kupplungselement 31 aus der Kammer 24 herauszuziehen.

Für die Variationen der inneren Umfangsfläche 50 der Kammer 24 und der komplementären äußeren Umfangsfläche 52 des Kupplungselementes 31 gelten dieselben Kriterien wie für den Kupplungsabschnitt 20 und den komplementären Gegenkupplungsabschnitt 34, d.h. bei kreiszylindrischen Umfangsflächen bestehen die Variationsmöglichkeiten im Durchmesser und in der Exzentrizität und bei unrunden Umfangsflächen können zusätzlich oder alternativ die Umfangskonturen aus beliebig gewölbten oder sogar teilweise oder ausschließlich geradlinigen Konturenabschnitten zusammengesetzt sein.

Der Vorteil der Trennung der Kupplungsfunktion von der Kraftübertragungsfunktion besteht darin, daß das Kupplungselement sehr klein dimensioniert ist und die Form einer Münze haben kann. Dieses Kupplungselement 31 paßt nur in einer ganz bestimmten relativen Drehstellung in die Kammer 24. Nachdem dieser erste Kupplungsschritt durchgeführt ist, kann die Schutzhülse mit dem Kupplungselement 31 gemeinsam gedreht werden, bis der Gegenkupplungsabschnitt 34 in den Kupplungsabschnitt 20 einschiebbar ist. Damit ist der zweite Kupplungsschritt vollzogen. Mit den Flügeln 40 der Schutzhülse 22 kann dann der Kopf 12 gedreht werden.

FIG. 7 zeigt eine Draufsicht auf die Außenseite des Kupplungselementes 31 und man sieht hier auch, daß drei umfangsverteilte Axialstege 54 an der Muffe 46 vorgesehen sind, die in entsprechende Axialnuten der Schutzhülse 22 eingreifen, um die Flügel 40 mit der Schutzhülse 22 drehsicher zu verbinden.

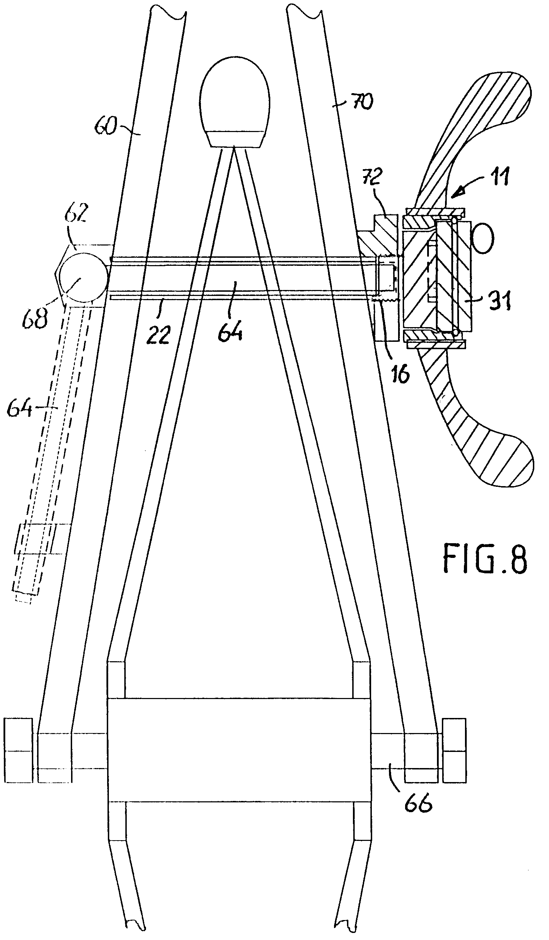

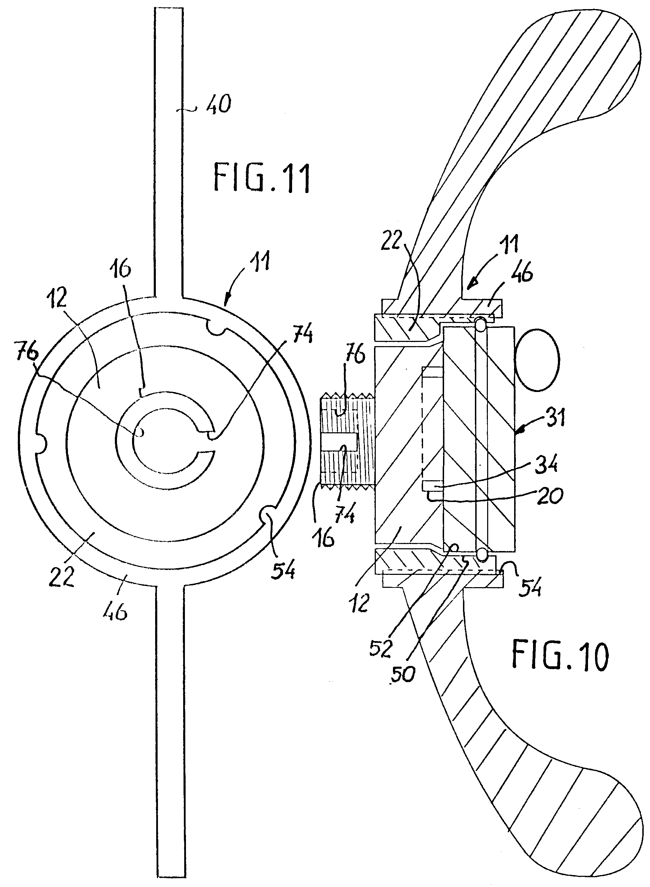

Die Figuren 8-10 zeigen die Anwendung des Sicherheitsschraubelementes als Diebstahlsicherung für ein Fahrrad. An einem Gabelholm 60 der Radgabel ist ein Lager 62 angeschweißt, in dem eine Riegelstange 64 um eine zur Radachse 66 rechtwinklige horizontale Schwenkachse 68 schwenkbar gelagert ist. Am anderen Gabelholm 70 ist ein Halter 72 angeschweißt, der eine horizontale Gewindebohrung zum Einschrauben eines Schraubbolzens 16 eines Sicherheitsschraubelementes 11 aufweist. Die Gewindebohrung setzt sich nach unten in einen Einführschlitz für das Ende der Riegelstange 64 fort. Der Schraubbolzen 16 hat einen radialen Eintrittsschlitz 74 (FIG. 10, 11). Wenn dieser nach Einsetzen des Kupplungselementes 31 in die Kammer 24 des Schraubelementes 11 in die Schwenkebene der Riegelstange 64 und damit fluchtend mit dem Einführschlitz des Halters 72 gedreht worden ist, kann diese Riegelstange von unten her in ein, im Schraubbolzen 16 gebildetes Sackloch 76, eintreten, wonach das Schraubelement 31 im Gewindeloch des Halters 72 durch eine Teilumdrehung festgezogen wird. Die Riegelstange 64 ist dann gegen Abwärtsschwenkung gesichert und nach Abziehen des Kupplungselementes 31 ist eine Manipulation an der Diebstahlsicherung ausgeschlossen.

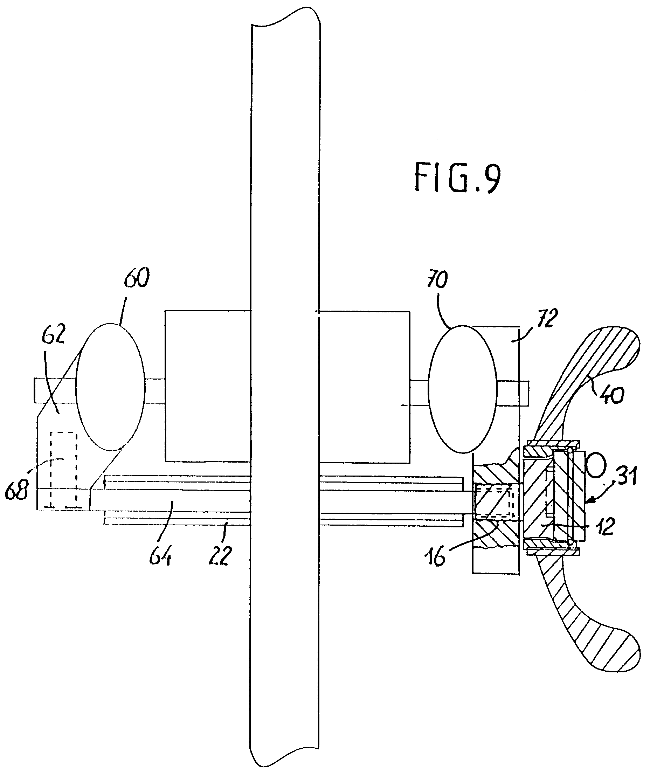

Das Kupplungselement 31 bei der Ausführung gemäß Figuren 8-11 ist hinsichtlich der Zweifachkupplung, nämlich der Kupplung zwischen Schutzhülse 22 und Kupplungselement 31 und zwischen diesem und dem Schraubenkopf 12 entsprechend FIG. 6 ausgebildet, jedoch mit dem Unterschied, daß der Kopf 12 kein Gewindeloch, sondern eben den hohlen Schraubbolzen 16 aufweist. Die Radachse ist hier mittels herkömmlicher Mehrkantmuttern an den Gabelholmen 60, 70 befestigt, da eine Abnahme des Rades dank der Diebstahlsicherung ausgeschlossen ist. In den Figuren 8 und 9 ist die Riegelstange 64 zusätzlich von einer drehbaren Schutzhülse 22 umgeben, die jedoch nur nötig ist, wenn die Schwenkachse 68 so klein dimensioniert ist, daß die Riegelstange 64 mittels einer Rohrzange erfaßt und von der Schwenkachse 68 abgeschert werden kann.

Der Kupplungsabschnitt 20 im Schraubenkopf 12 ist bei der Ausführung gemäß Figuren 8-11 als Ringnut ausgebildet, in die ein Ringsteg als Gegenkupplungselement 34 am Kupplungselement 31 eingreift. Bei abgezogenem Kupplungselement 31 ist die Schutzhülse 22 frei drehbar, sodaß für Unbefugte nur die Ringnut am Schraubenkopf 12 für eine Manipulation zur Verfügung steht. Da diese aber keine Angriffspunkte für beliebige Handwerkzeuge bildet, um Drehkräfte zu übertragen, kann die Schraubverbindung von Unbefugten nicht gelöst werden.

Das Sicherheitsschraubelement 10 bzw. 11 läßt sich überall dort mit Vorteil anstelle herkömmlicher entsprechender Schrauben oder Muttern verwenden, wo ein Diebstahlschutz erwünscht ist. So können an einem Fahrrad sämtliche Befestigungsschrauben oder Muttern für den Fahrradlenker, den Fahrradsattel, die beiden Räder und für Zubehör aus dem gleichen Set stammen, dem ein einziges Werkzeug 30 bzw. Kupplungselement 31 zugeordnet ist.

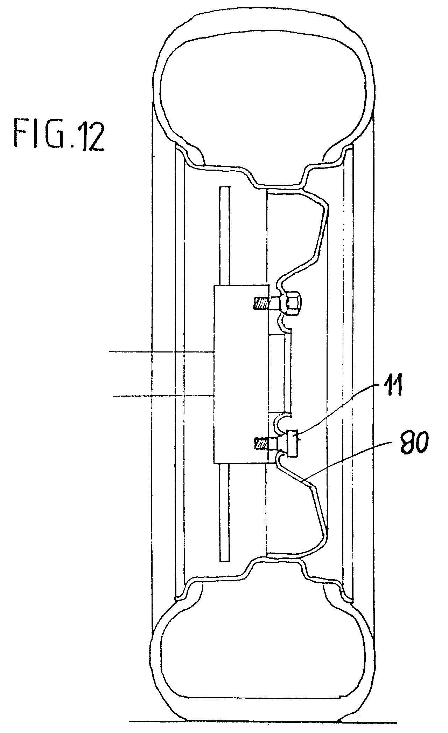

FIG. 12 veranschauflicht eine Kraftfahrzeug-Radfelge 80, die statt mit der, in der oberen Hälfte dieser Figur dargestellten Felgenschraube mittels der erfindungsgemäßen Befestigungselemente 11 diebstahlsicher festgeschraubt ist.

## Patentansprüche

1. Sicherheitsschraubelement mit einem Kopf (12) und einem koaxialen Schraubabschnitt (14; 16), wobei der Kopf (12) von einer frei drehbaren Schutzhülse (22) umgeben ist und seine freiliegende Stirnfläche einen exzentrischen und/oder unrunden Kupplungsabschnitt (20) zum formschlüssigen Eingriff eines axial kuppelbaren Kupplungselementes (30; 31) aufweist, **dadurch gekennzeichnet, daß** der Kupplungsabschnitt (20) aus einem Gebilde mit umfangsgeschlossener Kontur besteht, welche die Achse des Schraubelementes (10, 11) umgibt.

2. Sicherheitsschraubelement nach Anspruch 1, **dadurch gekennzeichnet, daß** die geringste Weite des Kupplungsabschnittes (20) mindestens 50% dessen größter Weite beträgt.

3. Sicherheitsschraubelement nach Anspruch 1 oder 2, **dadurch gekennzeichnet, daß** die Umfangskontur des Kupplungsabschnittes (20) sich aus Konturenabschnitten zusammensetzt und zwei benachbarte Konturenabschnitte einen Winkel von mindestens 135° miteinander bilden.

4. Sicherheitsschraubelement nach einem der Ansprüche 1-3, **dadurch gekennzeichnet, daß** die Umfangskontur des Kupplungsabschnittes (20) wenigstens teilweise stetig gekrümmt ist.

5. Sicherheitsschraubelement nach einem der Ansprüche 1-4, **dadurch gekennzeichnet, daß** der geometrische Mittelpunkt der vom Kupplungsabschnitt (20) umschlossenen Fläche von der Achse des Schraubelementes (10, 11) einen Abstand höchstens gleich etwa 25% der größten Weite des Kupplungsabschnittes (20) hat.

6. Sicherheitsschraubelement nach einem der Ansprüche 1-5, **dadurch gekennzeichnet, daß** die vom Kupplungsabschnitt (20) umschlossene Stirnfläche in jedem Flächenbereich einen Abstand von der benachbarten Stirnfläche des Kopfes (12) aufweist.

7. Sicherheitsschraubelement nach einem der Ansprüche 1-6, **dadurch gekennzeichnet, daß** der Kupplungsabschnitt (20) wenigstens über einen Teil seines Umfanges aus einem Ringsteg oder einer Ringnut besteht.

8. Sicherheitsschraubelement nach einem der Ansprüche 1-7, **dadurch gekennzeichnet, daß** die Schutzhülse (22) über den Kopf (12) des Schraubelementes (10, 11) stirnseitig vorsteht und in dem überstehenden Bereich eine Kammer (24) gebildet ist, die eine exzentrische und/oder unrunde innere Umfangsfläche aufweist und in die ein am Außenumfang komplementär ausgebildetes Kupplungselement (30, 31) einsetzbar ist, das mit der Schutzhülse (22) am Unifang und mit dem Kopf (12) des Schraubelementes (10, 11) stirnseitig jeweils undrehbar gekuppelt ist.

9. Sicherheitsschraubelement nach Anspruch 8, **dadurch gekennzeichnet, daß** die Schutzhülse (22) mindestens einen sich nach außen erstreckenden Arm (40, 42, 44) aufweist.

10. Sicherheitsschraubelement nach Anspruch 9, **dadurch gekennzeichnet, daß** der mindestens eine Arm (40, 42, 44) an einer, auf die Schutzhülse (22) aufschiebbaren oder aufgeschobenen relativ undrehbaren Muffe (46) befestigt ist.

11. Sicherheitsschraubelement nach einem der Ansprüche 1-10, **dadurch gekennzeichnet, daß** der Schraubabschnitt (14, 16) von einem Gewindebolzen (16) des Schraubelementes (11) gebildet ist und daß sich an den Kopf (12) eine dem Schraubabschnitt (16) benachbart liegende konische Zentrierfläche anschließt, wobei das Schraubelement (11) zur diebstahlsicheren Befestigung eines Kraftfahrzeugrades bestimmt ist.

12. Sicherheitsschraubelement nach einem der Ansprüche 1-10, **dadurch gekennzeichnet, daß** der Schraubabschnitt von einem Gewindebolzen (16) des Schraubelementes (11) gebildet ist und daß der Gewindebolzen (16) mit einer Riegelstange (64) verbunden oder verbindbar ist, die ein Speichenrad eines Fahrrades zwischen den Speichen durchsetzt, wobei der Schraubabschnitt (16) in eine Gewindebohrung eines Halters (72) an einem Holm (70) einer Radgabel eingeschraubt ist und das freie Ende der Riegelstange (64) in einem Lager (62) am anderen Gabelholm (60) gehaltert ist.

13. Sicherheitsschraubelement nach Anspruch 12, **dadurch gekennzeichnet, daß** die Riegelstange (64) mit einem Ende in ein Sackloch des Lagers (62) axial eingesteckt und mit ihrem anderen Ende in ein Sackloch des Schraubabschnittes (16) des Schraubelementes (11) eingreift.

14. Sicherheitsschraubelement nach Anspruch 13, **dadurch gekennzeichnet, daß** die Riegelstange (64) am Lager (62) um eine zur Radachse wenigstens angenähert rechtwinklige Achse (68) schwenkbar gelagert ist und in der Umfangswand des Schraubansatzes (16) ein radialer Eintrittsschlitz (74) für das freie Ende der Riegelstange (64) vorgesehen ist.

15. Sicherheitsschraubelement nach einem der Ansprüche 1-14, **dadurch gekennzeichnet, daß** die Umfangsflächen des Kupplungsabschnittes (20, 50) konisch ausgebildet sind.
